# EUROPÄISCHE PATENTANMELDUNG

(11) **EP 1 336 829 A2**
(43) Veröffentlichungstag der Anmeldung: **20.08.2003**
(21) Anmeldenummer: 03003152.0
(22) Anmeldetag: 18.02.2003
(51) Int. Cl.: G01L 5/12

(54) **Vorrichtung zum Messen einer Axialkraft an einer Achse oder Welle**

(30) Priorität: 18.02.2002 DE 10206679
(71) Anmelder: Micro Mechatronic Technologies AG, 57080 Siegen (DE)
(72) Erfinder: Hempelmann, Willi, Dipl. Ing., 57462 Olpe (DE)
(74) Vertreter: Klingseisen, Franz, Dipl.-Ing.

(57) **Zusammenfassung**

Es wird eine Vorrichtung vorgesehen zum Messen einer Axialkraft an einer Achse oder Welle (11), umfassend
einen Meßring (1) zwischen einem Druckring (6) und einem Stützring (8), wobei auf dem Umfang des Meßrings (1) wenigstens zwei Meßelemente (2) diametral einander gegenüberliegend angeordnet sind, die zwischen radial beabstandeten, axial vorstehenden Vorsprüngen (7, 7') des Druckrings (6) angeordnet sind, und denen am Stützring (8) axial vorstehende Vorsprünge (9) gegenüberliegen., die bei Anliegen einer Axialkraft eine Verformung des Messrings zwischen den radial beabstandeten Vorsprüngen (7, 7') hervorrufen.

## Beschreibung

Die Erfindung betrifft eine Vorrichtung zum' Messen einer Axialkraft an einer Achse oder Welle, wobei der Erfindung die Aufgabe zugrundeliegt, eine platzsparende Meßvorrichtung vorzusehen, mittels der auch sehr geringe Kräfte gemessen werden können.

Diese Aufgabe wird erfindungsgemäß durch die Merkmale des Anspruchs 1 gelöst. Dadurch, dass die Meßelemente auf dem Umfang eines Meßrings angeordnet sind, der in radialer Richtung einer Verformung unterworfen wird, können sehr geringe axiale Auslenkungen und damit sehr geringe axiale Kräfte gemessen werden, wobei sich insgesamt ein kompakter Aufbau der Meßvorrichtung ergibt.

Die Erfindung wird beispielsweise anhand der Zeichnung näher erläutert. Es zeigen
- Fig. 1: in einer perspektivischen Ansicht die drei Grundelemente der Meßvorrichtung in einer perspektivischen Ansicht,
- Fig. 2: eine Ansicht der drei Grundelemente von links in Fig. 1,
- Fig. 3: einen Teilschnitt durch die Meßvorrichtung,
- Fig. 4: eine perspektivische Ansicht der Meßvorrichtung an einer Spindel,
- Fig. 5: schematisch die Leitungsführung an dem Meßring, und
- Fig. 6: eine perspektivische Ansicht einer Betätigungsvorrichtung mit der Meßvorrichtung.

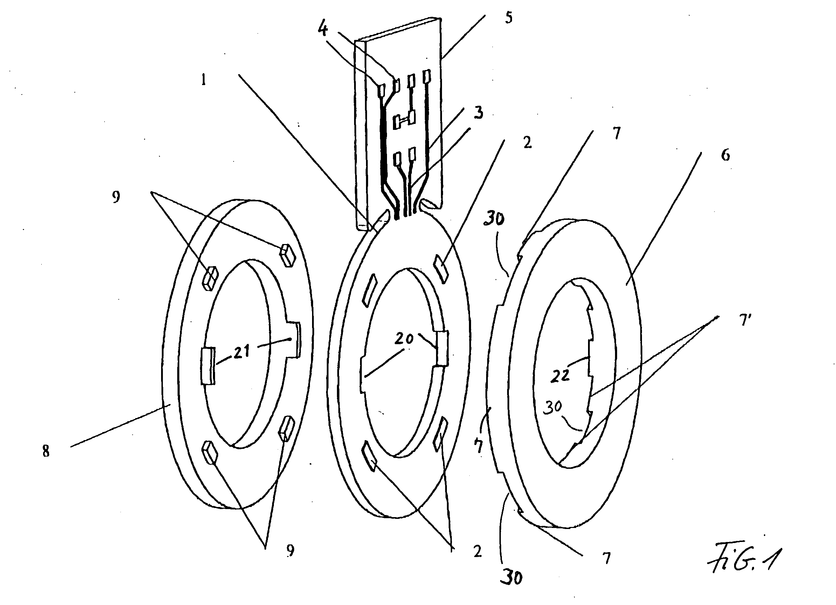

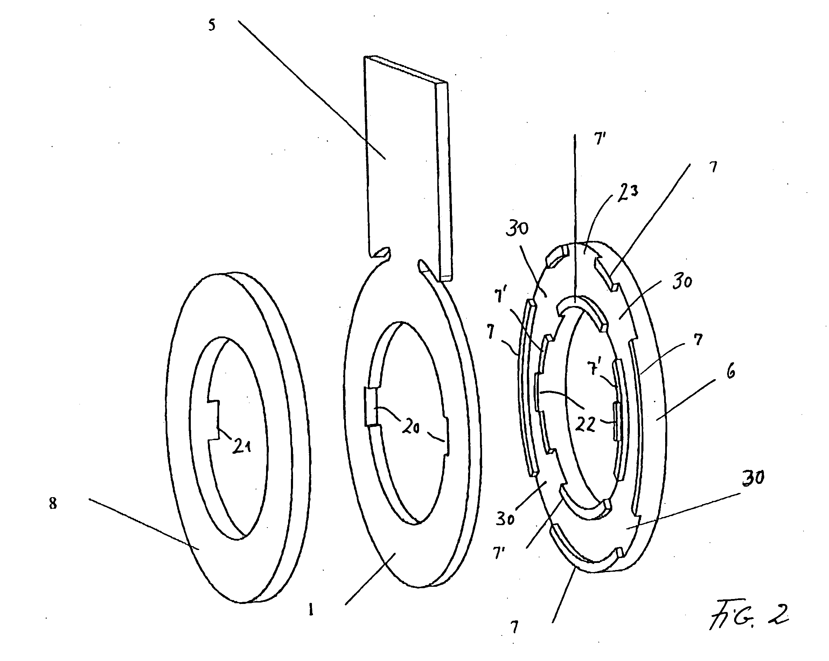

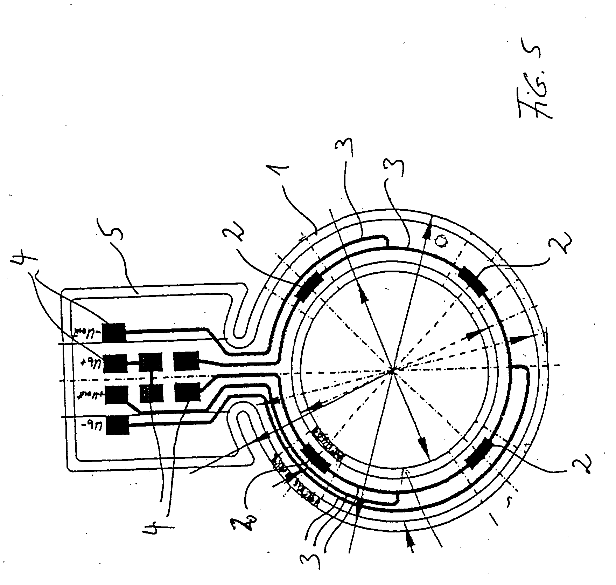

In den Fig. 1 und 2 ist mit 1 ein Meßring bezeichnet, auf dessen einer Seitenfläche bei dem dargestellten Ausführungsbeispiel vier Meßelemente 2 in Form von Dehnungsmeßstreifen vorzugsweise als Dickschicht- oder Dünnschichtelemente angebracht sind, die sich jeweils in Rechteckform in Umfangsrichtung erstrecken. Die vier Meßelemente 2 haben im Wesentlichen den gleichen Winkelabstand voneinander und sie sind über Leitungen 3 (Fig. 5) mit Ausgängen 4 auf einer radial vom Meßring 1 abstehenden Lasche 5 verbunden.

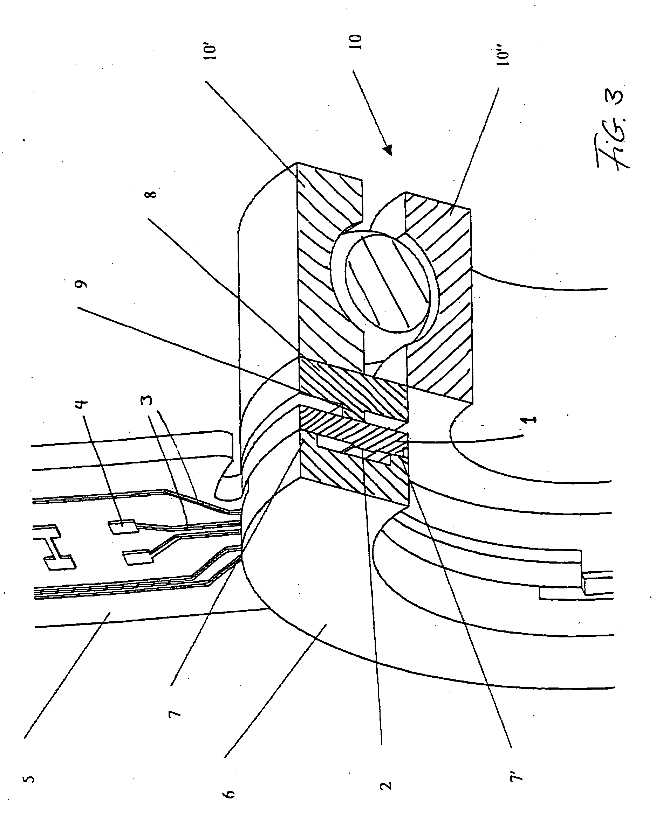

Dem Meßring 1 liegt auf der Seite der Meßelemente 2 ein Druckring 6 gegenüber, der im Bereich der Meßelemente 2 mit axial abstehenden Vorsprüngen 7 auf dem Außenumfang und in radialer Richtung gegenüberliegend entsprechenden Vorsprüngen 7' auf dem Innenumfang derart versehen ist, dass bei Anlage des Druckrings 6 am Meßring 1 die Meßelemente 2 in radialer Richtung vorzugsweise mittig zwischen den Vorsprüngen 7 und 7' liegen, wie Fig. 3 zeigt.

Auf der gegenüberliegenden Seite des Meßrings 1 ist ein Stützring 8 vorgesehen, der bei dem dargestellten Ausführungsbeispiel etwa mittig auf der Seiten- bzw. Ringfläche mit vier axial abstehenden, etwa rechteckigen Vorsprüngen 9 versehen ist, die auf einem Radius entsprechend dem der Meßelemente 2 positioniert sind, so dass die axialen Vorsprünge 9 des Stützrings 8 auf der Rückseite des Meßrings 1 an der Stelle der Meßelemente 2 anliegen, wie Fig. 3 zeigt, die auf einem Radius zwischen den in radialer Richtung innen und außen vorgesehenen Vorsprüngen 7 und 7' des Druckrings 6 liegen.

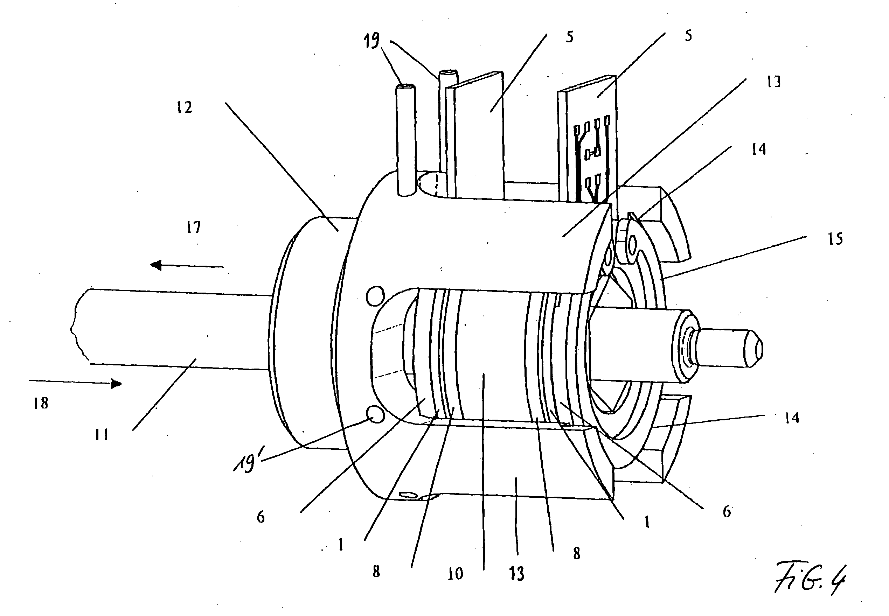

Fig. 3 zeigt die aus Meßring 1, Druckring 6 und Stützring 8 aufgebaute Meßvorrichtung im Einbauzustand in Anlage an einem Kugellager 10, an dessen äußerem Laufring 10' der Stützring 8 anliegt, während der innere Laufring 10" von der Meßvorrichtung nicht beaufschlagt und z. B. auf einer Spindel 11 (Fig. 4) angeordnet ist.

Meßring 1, Druckring 6 und Stützring 8 haben im Querschnitt im Wesentlichen eine Rechteckform, wobei die Vorsprünge 7 und 7' angrenzend an den Außen- und Innenrand des Druckrings 6 ausgebildet sind und die Vorsprünge 9 im Mittelbereich der langen Seite des Stützrings 8.

Fig. 1 und 2 zeigen am Innenumfang des Meßrings 1 diametral einander gegenüberliegende Ausnehmungen 20, in die axial vorstehende Rippen 21 am Innenumfang des Stützrings 8 sowie axial vorstehende Rippen 22 am Innenumfang des Druckrings 6 eingreifen und die Lage der drei Ringe relativ zueinander festlegen. Diese Verdrehsicherung an den drei Ringen 1, 6 und 8 kann auch in anderer Weise ausgebildet sein, beispielsweise durch axial abstehende Stifte, die in Bohrungen am gegenüberliegenden Ring eingreifen.

Die axial abstehenden Vorsprünge 7 und 7' am Druckring 6 können so angeordnet sein, dass diese Vorsprünge auf dem Radius der Meßelemente 2 innen und außen am Umfang des Druckrings vorstehen, wie dies Fig. 3 zeigt, so dass durch die Abstützung am Vorsprung 9 des Stützrings 8 die beiden Vorsprünge 7 und 7' eine Durchbiegung des Meßrings 1 in radialer Richtung an den Meßelementen 2 ergeben. Hierdurch wird ein Meßsignal entsprechend dem Maß der Durchbiegung vom Meßelement 2 abgegeben.

Bei der Ausführungsform nach den Fig. 1 und 2 sind die Vorsprünge 7 und 7' am Druckring 6 im Bereich zwischen den Meßelementen 2 am Meßring 1 angeordnet, so dass ein Meßelement 2 mittig in dem Freiraum 30 zwischen den Vorsprüngen 7 und 7' am Außen- und Innenumfang des Druckrings 6 liegen. Hierdurch wird bei einer Druckbeaufschlagung in Achsrichtung am Druckring 6 unter Abstützung der Meßelemente 2 durch die Vorsprünge 9 am Stützring 8 der Meßring 1 im Bereich der Meßelemente 2 durch vier um ein Meßelement 2 gebildete Kanten der Vorsprünge 7 und 7' nicht nur in radialer Richtung, sondern auch in Umfangsrichtung verformt, wodurch aufgrund der vier Abstützpunkte um ein Meßelement 2 eine höhere Empfindlichkeit erreicht wird. Die vier Anlagepunkte um ein Meßelement 2 werden durch die vier Kanten der Vorsprünge 7 und 7' um den Freiraum 30 gebildet.

Wie Fig. 2 zeigt, ist der zwischen den beiden oberen Meßelementen 2 am Außenumfang des Druckrings 6 ausgebildete Vorsprung 7 unterteilt ausgebildet, so dass sich ein Spalt 23 ergibt, der dem Ansatz der Lasche 5 gegenüberliegt und durch den die Leitungen 3 geführt werden, welche die einzelnen Meßelemente 2 mit den Anschlüssen 4 verbinden, wie dies Fig. 5 zeigt.

Fig. 4 zeigt in einer perspektivischen Ansicht eine Meßanordnung mit zwei Meßvorrichtungen nach den Fig. 1 und 2, wobei auf der Spindel 11 ein Gehäuse 12 angeordnet ist, das ausgehend von einem zylindrischen Abschnitt vier in Achsrichtung sich erstreckende Arme 13 aufweist, die am freien Ende mit einem radial nach innen vorspringenden Absatz 14 versehen sind, an denen ein Sicherungsring 15, beispielsweise ein Seeger-Ring, anliegt. Dieser Sicherungsring 15 liegt bei der dargestellten Meßanordnung am Druckring 6 der in Fig. 4 rechten Meßvorrichtung an, deren Stützring 8 an dem äußeren Laufring 10' des Kugellagers 10 anliegt. Auf der gegenüberliegenden Seite des Kugellagers 10 liegt an dessen äußeren Laufring 10' ein Stützring 8 einer zweiten Meßvorrichtung an, die entsprechend der Anordnung in Fig. 3 angeordnet ist.

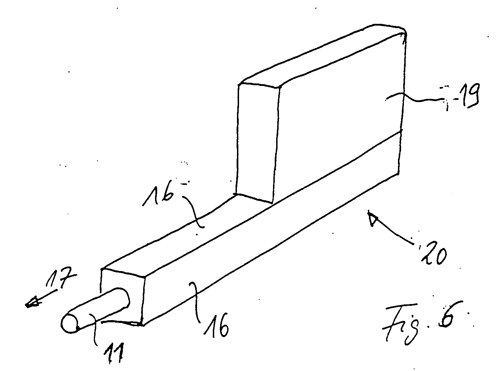

Mit 19 sind in Fig. 4 radial abstehende Stifte am Gehäuse 12 bezeichnet, die zur Positionierung des Gehäuses 12 innerhalb eines die Meßanordnung umgebenden größeren Gehäuses dienen, beispielsweise zur Positionierung in dem Gehäuse 16 der Fig. 6. Mit 19' sind Bohrungen im Gehäuse 12 bezeichnet, in die solche Positionierstifte 19 eingesteckt werden können.

An dem Druckring 6 der in Fig. 4 linken Meßvorrichtung liegt ein im Einzelnen nicht dargestellter Gewindering an, der im Gehäuse 12 relativ zum Sicherungsring 15 verschraubbar ist, um die aus den zwei Meßvorrichtungen beiderseits des Kugellagers 10 ausgebildete Meßanordnung gegen die radial nach innen vorstehenden Vorsprüngen 14 der Arme 13 des Gehäuses 12 einzuspannen. Die so gebildete Meßvorrichtung bildet im nicht beaufschlagten Zustand ein steifes System, das beiderseits des Lagers 10 um die Spindel 11 angeordnet ist. Das Gehäuse 12 hat keine Verbindung mit der Spindel 11, es bildet lediglich eine Einspanneinrichtung für die Meßvorrichtung beiderseits des äußeren Laufrings des Lagers 10.

Das Gehäuse 12 ist in einem umgebenden Gehäuse 16 einer Betätigungsvorrichtung 20 angeordnet (Fig. 6), wobei ein Stellelement zum axialen Verschieben der Spindel 11 in dem Gehäuse 16 untergebracht ist. Auf dem langgestreckten Gehäuse 16 ist ein Gehäuseteil 19 angebracht, in dem Auswertelektronik und weitere Meßeinrichtungen untergebracht sind.

Wenn von dieser Betätigungsvorrichtung 20 eine Axialkraft auf die Spindel 11 in Richtung des Pfeils 17 in Fig. 4 und 6 ausgeübt wird, wird über das Lager 10 bzw. dessen inneren Laufring 10" eine Kraft auf den äußeren Laufring 10' in Achsrichtung ausgeübt, der den in Fig. 4 linken Stützring 8 derart beaufschlagt, dass der anliegende Meßring 1 gegen den Druckring 6 gedrückt wird, so dass sich der Meßring 1 in radialer Richtung im Bereich der Meßelemente 2 zwischen den in radialer Richtung beabstandeten Vorsprüngen 7 und 7' des Druckrings 6 verformt, wodurch ein entsprechendes Signal abgegeben wird. Der Druckring 6 der in Fig. 4 linken Meßvorrichtung wird hierbei durch den im Gehäuse 12 abgestützten Gewindering gegen eine axiale Bewegung gesichert.

Gleichzeitig wird an der in Fig. 4 rechten Meßvorrichtung über die Arme 13 und den Sicherungsring 15 der Druckring 6 mit einer Axialkraft beaufschlagt, so dass die Vorsprünge 7 und 7' im Bereich der Meßelemente 2 gegen den Meßring 1 drücken, wobei durch die Abstützung am Stützring 8 der Meßring im Meßbereich verformt wird. Hierdurch wird auch an der rechten Meßvorrichtung ein der aufgebrachten Axialkraft entsprechendes Signal wie bei der linken Meßvorrichtung abgegeben. Damit bildet die Meßanordnung nach Fig. 4 auch beim Meßvorgang ein steifes System.

Wird die Spindel 11 durch eine Kraft in Richtung des Pfeils 18 in Fig. 4 entgegen dem stationär angeordneten Gehäuse 12 bzw. dem stationär angeordneten Gehäuse 16 der Betätigungsvorrichtung beaufschlagt, so drückt der äußere Laufring 10' des Lagers 10 gegen den Stützring 8 der in Fig. 4 rechten Meßvorrichtung, so dass der Meßring 1 im Bereich der auf dem Umfang verteilt angeordneten Meßelemente 2 in radialer Richtung durch die Abstützung zwischen den radial beabstandeten Vorsprüngen 7 und 7' des Druckrings 6 derart verformt wird, dass ein Meßsignal von den Meßelementen 2 über die zur Lasche 5 führenden Leitungen abgegeben wird, das der in Achsrichtung wirkenden Kraft entspricht.

In gleicher Weise wird bei Beaufschlagung in Richtung des Pfeils 18 auch die linke Meßvorrichtung über den Gewindering am Gehäuse 12 beaufschlagt, so dass auch in dieser Beaufschlagungsrichtung von der linken Meßvorrichtung ein der Axialkraft entsprechendes Signal abgegeben wird.

Durch eine Meßvorrichtung der beschriebenen Art kann eine Axialkraft im Bereich von 1 N gemessen werden, die einer axialen Bewegung der Spindel 11 im Bereich von einem µ entsprechen kann. Die beschriebene Meßvorrichtung kann beispielsweise für die Ermittlung von Axialkräften von 1 bis 500 N eingesetzt werden, wobei das Lager 10 auch in anderer Weise ausgebildet sein kann.

Insbesondere wird die beschriebene Meßvorrichtung für die Diagnose von Gesamtsystemen eingesetzt, wobei die in Fig. 6 wiedergegebene Betätigungsvorrichtung für die Positionsmessung und Regelung im Bereich von +/- 1 µ beispielsweise für die automatische Qualitätssicherung bei Bewegungsprozessen eingesetzt wird. Hierbei wird durch die in Fig. 6 wiedergegebene Betätigungsvorrichtung eine Stellbewegung der Spindel 11 vor und zurück aufgenommen.

Die in Fig. 5 wiedergegebene Schaltungsanordnung der vier Meßelemente 2 ist entsprechend einer Brückenschaltung ausgebildet, so dass die Auslenkungen an den einzelnen Meßelementen 2 auf dem Umfang zu einem Gesamtwert der auftretenden Axialkraft gemittelt wird.

Anstelle von vier Meßelementen 2 auf dem Umfang des Meßrings 1 können auch drei oder mehr als vier Meßelemente vorgesehen werden. Auch können die Auflagerstellen um die Meßelemente 2 am Druckring 6 in anderer Weise positioniert werden, um eine Durchbiegung des Meßrings 1 an den Meßelementen zu bewirken.

Die beschriebene Meßvorrichtung kann auch zum Messen einer Axialkraft beispielsweise an einem Stempel, Druckstab oder dergleichen verwendet werden, wobei ein Flansch oder eine Ringschulter des Stempels am Druckring 6 anliegt und der Stützring 8 an einem stationären Teil oder einem Gehäuseteil abgestützt ist. Auch hierbei kann der Druckring 6 mit den in radialer Richtung und in Umfangsrichtung beabstandeten Vorsprüngen 7, 7' als Stützring und der Stützring 8 als Druckring wirken. Mit anderen Worten kann die Funktion des Druck- und des Stützrings auch vertauscht werden.

Anstelle einer solchen einseitigen Anordnung der Meßvorrichtung an einem Druckstab kann diese auch zu beiden Seiten eines Flansches entsprechend der Ausführungsform nach Fig. 4 vorgesehen werden, wenn der Druckstab als Druck- und Zugstab verwendet wird und Axialkräfte in den beiden entgegengesetzten Richtungen gemessen werden sollen. Hierbei ist es nicht erforderlich, dass beide Meßvorrichtungen durch ein Gehäuse 12 mit Armen 13 auf beiden Seiten eingespannt werden, vielmehr kann jede Meßvorrichtung für sich an einem gesonderten Gehäuseteil abgestützt sein.

## Patentansprüche

1. Vorrichtung zum Messen einer Axialkraft z. B. an einer Achse oder Welle (11), umfassend
einen Messring (1) zwischen einem Druckring (6) und einem Stützring (8),
wobei auf der Seitenfläche des Messrings (1) wenigstens zwei Meßelemente (2) diametral einander gegenüberliegend angeordnet sind, die zwischen radial beabstandeten, axial vorstehenden Vorsprüngen (7, 7') des Druckrings (6) angeordnet sind, und denen am Stützring (8) axial vorstehende Vorsprünge (9) gegenüberliegen, die bei Anliegen einer Axialkraft eine Verformung des Messrings zwischen den radial beabstandeten Vorsprüngen (7, 7') hervorrufen.

2. Vorrichtung nach Anspruch 1, wobei die Anordnung aus Messring (1), Druckring (6) und Stützring (8) durch eine Einspanneinrichtung (12) an einem Lager (10) oder einem Flansch auf der Achse oder Welle (11) gehalten und die Einspanneinrichtung (12) relativ zur Achse oder Welle (11) abgestützt ist.

3. Vorrichtung nach Anspruch 1, wobei am Meßring (1) eine radial abstehende Lasche (5) ausgebildet ist, auf der die mit den Meßelementen (2) verbundenen Leitungen (3) zu Anschlussklemmen (4) führen.

4. Vorrichtung nach Anspruch 1, wobei der die Meßelemente (2) am Meßring (1) abstützende Stützring (8) am äußeren Laufring (10') eines Kugellagers (10) anliegt.

5. Vorrichtung nach den vorhergehenden Ansprüchen, wobei auf den beiden Seiten eines Lagers (10) jeweils eine Meßvorrichtung aus Meßring (1), Druckring (6) und Stützring (8) angeordnet ist und diese Meßanordnung von einem Gehäuse (12) umgeben ist, das die beiden Meßvorrichtungen am Lager (10) eingespannt hält.

6. Vorrichtung nach Anspruch 5, wobei das Gehäuse (12) axial abstehende Arme (13) aufweist, die einen Sicherungsring (15) abstützen, der die Meßanordnung gegenüber einem in dem Gehäuse (12) eingeschraubten Gewindering hält.

7. Vorrichtung nach Anspruch 1, wobei die Meßelemente (2) in Umfangsrichtung zwischen den in Umfangsrichtung beabstandeten Vorsprüngen (7, 7') des Druckrings (6) angeordnet sind.

8. Vorrichtung nach Anspruch 1, wobei die Meßelemente (2) in radialer Richtung zwischen den axial vorstehenden Vorsprüngen (7, 7') des Druckrings (6) angeordnet sind.
